# EUROPEAN PATENT SPECIFICATION

(11) **EP 2 873 938 B1**
(45) Date of publication and mention of the grant of the patent: **14.04.2021**
(21) Application number: 13306555.7
(22) Date of filing: 14.11.2013
(51) Int. Cl.: F25J 3/04, B01D 53/04, B01J 20/34

(54) **Process and apparatus for the separation of air by cryogenic distillation**
Verfahren und Vorrichtung zur Luftzerlegung durch Tieftemperaturdestillation
Processus et appareil pour la séparation de l'air par distillation cryogénique

(43) Date of publication of application: 20.05.2015
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: Rega, Mariano, 20133 Milano (IT)
(74) Representative: Air Liquide

(56) References cited:
- EP-A1- 0 232 426
- EP-A1- 0 829 691
- EP-A1- 2 620 732
- DE-A1-102012 001 606
- DE-U1- 20 205 751
- JP-A- H0 240 485
- US-A1- 2012 324 944

## Description

The present invention relates to a process and apparatus for the separation of air by cryogenic distillation.

Before being separated at cryogenic temperatures, compressed air is purified to remove water and carbon dioxide by adsorption. For this the air is caused to pass through one of two vessels containing adsorbent material. Once the water and carbon dioxide have been adsorbed, the adsorption material is regenerated using nitrogen from the cryogenic air separation unit. The nitrogen has to be warmed to arrive at a temperature suitable for regeneration.

This may be done using an electrical heater. Otherwise, as described in US-A-5463870, EP-A-0456575, US-A-5846295, WO-A-2013079856, "Adsorption Purification for Air Separation Units" by Grenier et al, Cryogenic Processing and Equipment 1984, compression heat from the compressed air compressed in the final stage of a compressor may be used to preheat the nitrogen.

EP-A-2620732 describes a process similar to the process of Claim 1, suggesting that an unidentified regeneration gas could be warmed using compression heat. EP-A-0232426 shows an apparatus according to the preambles of Claims 1 and 7. As in the
present invention, EP-A-0232426 suggests that two sources of heat should be used to bring the nitrogen to the regeneration temperature, however all of the stream heated using compressed air is further heated using an electric heater, so that the nitrogen pressure is reduced, because of the pressure drop in both sources of heat.

According to one object of the invention, there is provided a process according to Claim 1.

According to other optional features:
- the gas enriched in nitrogen is heated after the heating step with compressed air by another means, for example by heating with an electrical heater.
- the gas enriched in nitrogen contains at least 85% mol. nitrogen
- the air is further cooled after having been cooled by the nitrogen and before entering the second stage of the compressor, preferably using a cooling circuit using water as the cooling medium.
- the cooling circuit using water as the cooling medium is also used to cool the air downstream of the second stage
- water is heated by indirect heat exchange with air compressed in the first stage of the compressor and to be compressed in the second stage of the compressor to cool the air and the water is used in a process other than the process for the separation of air.
- the process other than the process for the separation of air is a heating process in which the heated water is used to heat another entity
- the other entity may be a building, a municipal heating system etc
- no heat of the compression from any other stage of the compressor is used to heat the gas enriched in nitrogen to be sent to the purification unit.
- during a first period, corresponding to a regeneration period of one of the adsorption vessels, the gas enriched in nitrogen is warmed by heat exchange with air by means of the closed circuit and during a second period wherein none of the adsorption vessels is undergoing regeneration, the gas enriched in nitrogen is not warmed by means of the closed circuit but the closed circuit serves to heat another entity.

According to a further object of the invention, there is provided an apparatus according to Claim 7.

According to further optional aspects:
- the heat exchange means comprises a first heat exchanger for heat transfer from the air to a water cycle and a second heat exchanger for heat transfer from the water cycle to the gas enriched in nitrogen.
- the first stage of the compressor is an axial stage.
- the heat exchange means permitting the gas enriched in nitrogen to be warmed upstream of the second adsorption vessel by indirect heat exchange with air compressed in a first stage of the compressor as the only source of heat to be transferred via a closed circuit.
- the apparatus includes a further cooler for cooling the air between the first and second stages of the compressor.

The process will be described in greater detail with reference to the figures.

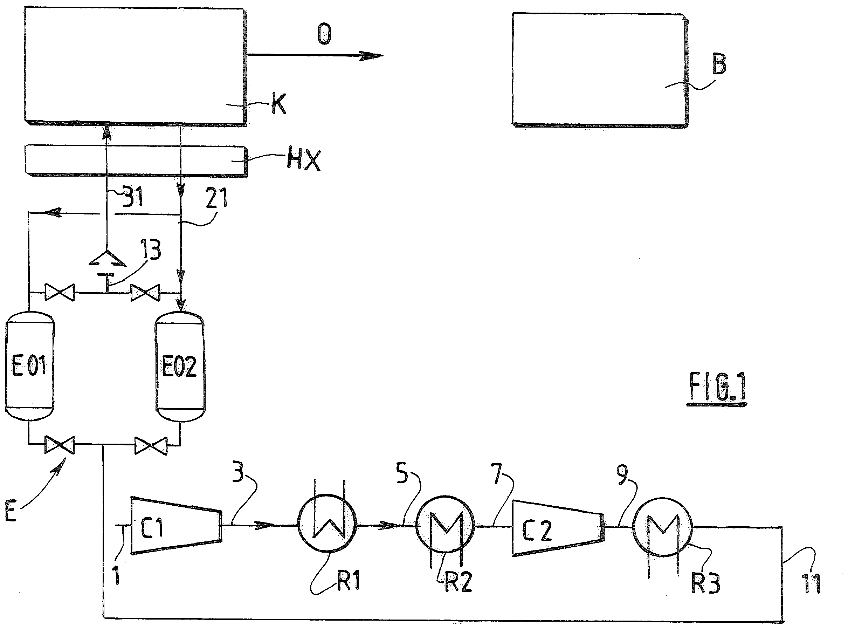

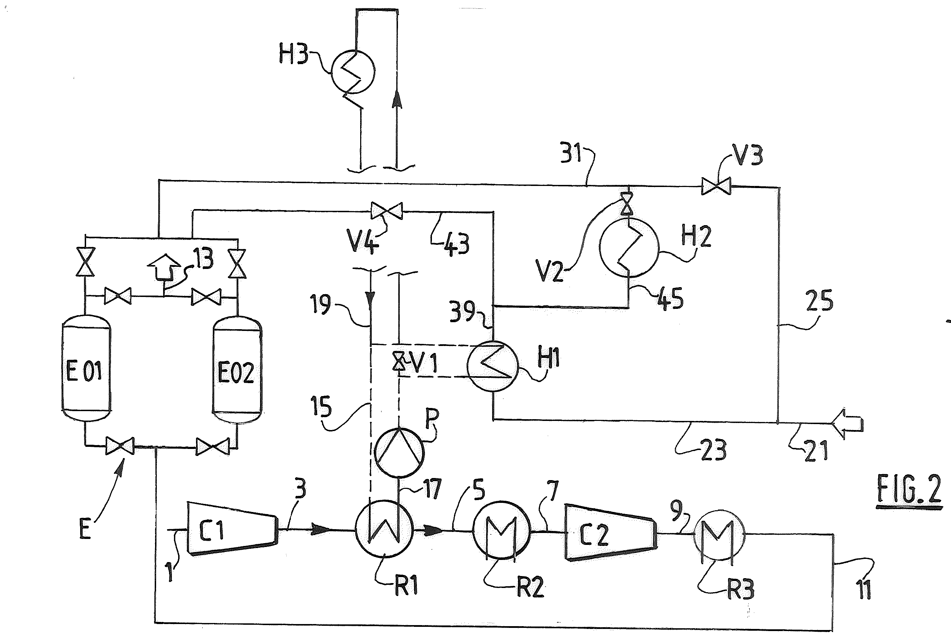

Figure 1 shows the basic features of a standard air separation plant into which the system of Figure 2 is intended to be integrated. Figure 2 shows a process for warming regeneration nitrogen.

In Figure 1, air 1 is compressed in a compressor having an axial first stage C1 and a radial second stage C2. The compressed air 11 is purified in a purification unit E to form purified air 13 and the purified air 13 is cooled in a heat exchanger HX against process streams from the distillation, only one of which is shown for clarity. The cooled air 31 from exchanger HX is sent to the column system K where the air is separated to form an oxygen rich fluid O. A nitrogen enriched gas 21 is removed from the column system K, warmed in exchanger HX by indirect heat exchange with air and forms warmed nitrogen enriched gas 21. This nitrogen enriched gas 21 is used to regenerate the purification unit E.

Another entity B is shown on Figure 1. This may be a building which requires to be heated or a municipal heating system.

In Figure 2, the system for warming the nitrogen is shown in detail. Air 1 is compressed in a compressor having an axial first stage C1 and a radial second stage C2. The air 1 is compressed in first stage C1 to a pressure of 1,9 bars, thereby heating the air from ambient temperature to 145°C. The air 3 is then cooled first in cooler R1 by heat exchange with a superheated pressure water loop at 9 bar, cooling the air to 105°C (stream 5) and afterwards in cooler R2 against a cooling water stream at ambient temperature, cooling the air to 24°C (stream 7). Air stream 7 is then further compressed in stage C2 to 4, 7 bars raising the temperature of the air 9 to 105°C. Stream 9 is cooled in cooler R3 by a water stream to a temperature of 26°C and is sent as stream 11 to the purification unit E which reduces the water and CO2 content of the air. The purified air 13 is sent to the distillation.

The water loop 15, 17 which includes a pump P is used to transfer heat from the axial stage C1 to a nitrogen stream.

Two modes of warming the regeneration nitrogen are possible.

According to the first mode, not according to the invention, valve V2 is open and valve V3 is closed and the nitrogen 21 from the air separation is heated first by compression heat from the feed air in heater H1 via the water loop 15,17 and then by an electrical heater H2 to bring the nitrogen to the final regeneration temperature of 140°C.

Thus the nitrogen 21 arrives via conduit 23 to heat exchanger H1 at a temperature close to the ambient. The nitrogen is heated to a temperature of 95°C in exchanger H1 by heat exchange with hot water 17 at a pressure of 9 bars. The hot water is cooled in exchanger H1 to form stream 15 and is sent to the heat exchanger R1.

The nitrogen 39 warmed in exchanger H1 then proceeds via open valve V2 and conduit 45 to the electrical heater H2 where it is warmed to 140°C and the stream flows via conduit 31 to adsorbent vessel E02.

According to a second mode, according to the invention, the nitrogen 21 is divided
in two, one part being heated in exchanger H1 only and the second part by the electrical heater H2 only, the first and second parts being mixed to form the regeneration stream. The advantage of this is to reduce the total pressure drop.

If the regeneration system is not working or if the hot water is surplus to demand, the hot water 19 from the loop 15, 17 can be used in unit B for heating the adjacent buildings or for heating another process stream.

It is only necessary to warm the regeneration nitrogen during the regeneration phases of the purification. During the periods in which there is no regeneration, the cooler R1 is used to heat the water in the cycle. No water is transferred to the heater H1 and the water is transferred instead to heater H3 which may be used to heat an adjacent building B or for a municipal heating system.

## Claims

1. Process for the separation of air by cryogenic distillation in which
i) air is compressed in a compressor having at least two stages (C1,C2) to form compressed air, all of the air compressed in the first of the two stages being compressed in the second of the two stages,
ii) compressed air compressed in the second stage of the compressor is purified in a first adsorption vessel (E01) of a purification unit (E), having at least first and second adsorption vessels connected in parallel, to form purified air (13),
iii) purified air from the purification unit is cooled from an ambient temperature to a cryogenic temperature in a heat exchanger (HX) and separated in a distillation column system (K) to produce a fluid enriched in oxygen (O) and/or a fluid enriched in nitrogen (21)
iv) a gas enriched in nitrogen is removed from the distillation column system,
v) the gas enriched in nitrogen is warmed upstream of the second adsorption vessel by indirect heat exchange with air to cool the air, the air having been compressed in the first stage of the compressor and to be compressed in the second stage of the compressor,
vi) the warmed gas enriched in nitrogen is sent to the second adsorption vessel (E02) as a regeneration gas, without being expanded in a turbine **characterized in that** the gas enriched in nitrogen is warmed to a temperature of at least 90°C upstream of the second adsorption vessel, the gas enriched in nitrogen being warmed by heat exchange with air by means of a closed circuit (17,P) in which water circulates at a pressure higher than 1.5 bars abs., preferably at a pressure higher than 5 bars abs, and a further stream of gas enriched in nitrogen removed from the distillation column is warmed by another means, for example an electrical heater (H2), to form a further warmed stream, the further warmed stream being hotter than the gas enriched in nitrogen warmed to a temperature of at least 90°C and the further warmed stream being sent after mixing with the gas enriched in nitrogen warmed to a temperature of at least 90°C to the second adsorption vessel (E02).

2. Process according to Claim 1 wherein the gas enriched in nitrogen is heated after the heating step with compressed air by another means, for example by heating with an electrical heater (H2).

3. Process according to any preceding claim wherein the air (5) is further cooled after having been cooled by the nitrogen and before entering the second stage of the compressor (C2).

4. Process according to any preceding claim wherein water is heated by indirect heat exchange with air compressed in a first stage of the compressor (C1) and to be compressed in a second stage of the compressor (C2) to cool the air and the water is used in a process other than the process for the separation of air.

5. Process according to any preceding claim wherein no heat of the compression from any other stage (C2) of the compressor is used to heat the gas enriched in nitrogen to be sent to the purification unit (E).

6. Process according to any preceding claim wherein during a first period, corresponding to a regeneration period of one of the adsorption vessels (E01,E02), the gas enriched in nitrogen is warmed by heat exchange with air by means of the closed circuit (17, P) and during a second period wherein none of the adsorption vessels is undergoing regeneration, the gas enriched in nitrogen is not warmed by means of the closed circuit but the closed circuit serves to heat another entity (B).

7. Apparatus for the separation of air by cryogenic distillation comprising a compressor having at least two stages (C1 ,C2), a purification unit (E) having at least first and second adsorption vessels (E01,E02) connected in parallel, a distillation column system (K), a conduit for sending air to be compressed to the compressor having at least two stages to form compressed air, such that all of the air compressed in the first of the two stages is also compressed in the second of the two stages, a conduit for sending compressed air (11) from the compressor to be purified in 2. the first adsorption vessel of the purification unit to form purified air, a heat exchanger (HX) for cooling purified air from the purification unit to a cryogenic temperature, a conduit for sending air from the heat exchanger to the distillation column system to produce a fluid enriched in oxygen (O) and/or a fluid enriched in nitrogen, a conduit for removing a gas enriched in nitrogen (21) from the distillation column system, heat exchange means (H1,R1) permitting the gas enriched in nitrogen to be warmed upstream of the second adsorption vessel by indirect heat exchange with air (3) compressed in the first stage of the compressor (C1) and to be compressed in the second stage of the compressor (C2) and a conduit (31,43,45) for sending the warmed gas enriched in nitrogen from the heat exchange means to the second adsorption vessel (E02), said conduit not being connected to a turbine **characterized in that** it comprises a further heating means (H2) for heating a further stream of gas enriched in nitrogen and a conduit (45) for sending the further gas to be mixed with the warmed gas enriched in nitrogen upstream of the second adsorption vessel.

8. Apparatus according to Claim 7 wherein the first stage of the compressor (C1) is an axial stage.

9. Apparatus according to Claim 7 or 8 wherein the heat exchange means (H1,R1) permits the gas enriched in nitrogen to be warmed upstream of the second adsorption vessel by indirect heat exchange with air compressed in a first stage of the compressor as the only source of heat to be transferred via a closed circuit (17, P).

10. Apparatus according to any of Claims 7 to 9 including a further cooler (R2) for cooling the air between the first and second stages (C1, C2) of the compressor.

## Patentansprüche

1. Verfahren zur Luftzerlegung durch Tieftemperaturdestillation, bei dem
i) Luft in einem mindestens zwei Stufen (C1, C2) aufweisenden Verdichter zur Bildung von verdichteter Luft verdichtet wird, wobei die gesamte der in der ersten der zwei Stufen verdichtete Luft in der zweiten der zwei Stufen verdichtet wird,
ii) verdichtete Luft, die in der zweiten Stufe des Verdichters verdichtet wurde, in einem ersten Adsorptionsbehälter (E01) einer Aufreinigungseinheit (E), die mindestens einen ersten und zweiten Adsorptionsbehälter, die parallel geschaltet sind, aufweist, zur Bildung aufgereinigter Luft (13) aufgereinigt wird,
iii) aufgereinigte Luft aus der Aufreinigungseinheit in einem Wärmetauscher (HX) von einer Umgebungstemperatur auf eine Tieftemperatur gekühlt wird und in einem Destillationskolonnensystem (K) zur Herstellung eines mit Sauerstoff (O) angereicherten Fluids und/oder eines mit Stickstoff (21) angereicherten Fluids zerlegt wird,
iv) ein mit Stickstoff angereichertes Gas aus dem Destillationskolonnensystem entfernt wird,
v) das mit Stickstoff angereicherte Gas stromaufwärts des zweiten Adsorptionsbehälters durch indirekten Wärmeaustausch mit Luft zur Kühlung der Luft erwärmt wird, wobei die Luft bereits in der ersten Stufe des Verdichters verdichtet wurde und noch in der zweiten Stufe des Verdichters zu verdichten ist,
vi) das mit Stickstoff angereicherte, erwärmte Gas als ein Regeneriergas ohne Ausdehnung in einer Turbine zu dem zweiten Adsorptionsbehälter (E02) geleitet wird, **dadurch gekennzeichnet, dass** das mit Stickstoff angereicherte Gas stromaufwärts des zweiten Adsorptionsbehälters auf eine Temperatur von mindestens 90 °C erwärmt wird, das mit Stickstoff angereicherte Gas durch Wärmeaustausch mit Luft mittels eines geschlossenen Kreislaufs (17,P), bei dem Wasser bei einem Druck von mehr als 1,5 bar abs., vorzugsweise bei einem Druck von mehr als 5 bar abs., umgewälzt wird, und ein weiterer aus der Destillationskolonne entfernter, mit Stickstoff angereicherter Gasstrom durch andere Mittel, beispielsweise einen elektrischen Heizapparat (H2), zur Bildung eines weiteren erwärmten Stroms erwärmt wird, wobei der weitere erwärmte Strom heißer als das auf eine Temperatur von mindestens 90 °C erwärmte, mit Stickstoff angereicherte Gas ist und der weitere erwärmte Strom nach der Vermischung mit dem auf eine Temperatur von mindestens 90 °C erwärmte, mit Stickstoff angereicherten Gas zu dem zweiten Adsorptionsbehälter (E02) geleitet wird.

2. Verfahren nach Anspruch 1, wobei das mit Stickstoff angereicherte Gas nach dem Heizschritt mit verdichteter Luft durch andere Mittel, beispielsweise durch Erwärmen mit einem elektrischen Heizapparat (H2), erwärmt wird.

3. Verfahren nach einem der vorhergehenden Ansprüche, wobei die Luft (5), nachdem sie durch den Stickstoff gekühlt wurde und bevor sie in die zweite Stufe des Verdichters (C2) eintritt, weiter gekühlt wird.

4. Verfahren nach einem der vorhergehenden Ansprüche, wobei Wasser durch indirekten Wärmeaustausch mit Luft, die in einer ersten Stufe des Verdichters (C1) verdichtet wurde und in einer zweiten Stufe des Verdichters (C2) noch zu verdichten ist, zur Kühlung der Luft erwärmt wird und das Wasser in einem Verfahren, das sich von dem Verfahren zur Luftzerlegung unterscheidet, verwendet wird.

5. Verfahren nach einem der vorhergehenden Ansprüche, wobei keine Wärme aus der Verdichtung aus einer anderen Stufe (C2) des Verdichters zur Erwärmung des mit Stickstoff angereicherten Gases, das zur Aufreinigungseinheit (E) geleitet werden soll, verwendet wird.

6. Verfahren nach einem der vorhergehenden Ansprüche, wobei das mit Stickstoff angereicherte Gas während eines ersten Zeitraums, der einem Regenierzeitraum von einem der Adsorptionsbehältern (E01,E02) entspricht, durch Wärmeaustausch mit Luft mittels des geschlossenen Kreislaufs (17,P) erwärmt wird und das mit Stickstoff angereicherte Gas während eines zweiten Zeitraums, bei dem keiner der Adsorptionsbehälter einer Regeneration unterzogen wird, nicht mittels des geschlossenen Kreislaufs erwärmt wird, der geschlossene Kreislauf aber dazu dient, ein anderes Gebilde (B) zu wärmen.

7. Vorrichtung zur Luftzerlegung durch Tieftemperaturdestillation, umfassend einen Verdichter mit zwei Stufen (C1, C2), eine Aufreinigungseinheit (E) mit mindestens einem ersten und einem zweiten Adsorptionsbehälter (E01, E02), die parallel geschaltet sind, ein Destillationskolonnensystem (K), einen Kreislauf zum Leiten von zu verdichtender Luft zu dem Verdichter mit mindestens zwei Stufen zum Bilden von verdichteter Luft, sodass die gesamte der in der ersten der zwei Stufen verdichteten Luft auch in der zweiten der zwei Stufen verdichtet wird, einen Kreislauf zum Leiten von verdichteter Luft (11) aus dem Verdichter zur Aufreinigung in dem ersten Adsorptionsbehälter der Aufreinigungseinheit zur Bildung von aufgereinigter Luft, einen Wärmetauscher (HX) zur Kühlung von aufgereinigter Luft aus der Aufreinigungseinheit auf eine Tieftemperatur, einen Kreislauf zum Leiten von Luft von dem Wärmetauscher zu dem Destillationskolonnensystem zur Herstellung eines mit Sauerstoff (O) angereicherten Fluids und/oder eines mit Stickstoff angereicherten Fluids, einen Kreislauf zum Entfernen eines mit Stickstoff angereicherten Gases (21) aus dem Destillationskolonnensystem, Wärmeaustauscheinrichtungen (H1,R1), die es dem mit Stickstoff angereicherten Gas erlauben, stromaufwärts des zweiten Adsorptionsbehälters durch indirekten Wärmeaustausch mit Luft (3), die in der ersten Stufe des Verdichters (C1) verdichtet wurde und noch in der zweiten Stufe des Verdichters (C2) zu verdichten ist, erwärmt zu werden, und einen Kreislauf (31,43,45) zum Leiten des erwärmten, mit Stickstoff angereicherten Gases von den Wärmeaustauscheinrichtungen zu dem zweiten Adsorptionsbehälter (E02), wobei der Kreislauf nicht mit einer Turbine verbunden ist, **dadurch gekennzeichnet, dass** sie eine weitere Wärmeaustauscheinrichtung (H2) zum Erwärmen eines weiteren mit Stickstoff angereicherten Gasstroms und einen Kreislauf (45), um das weitere Gas, das mit dem erwärmten, mit Stickstoff angereicherten Gas vermischt werden soll, stromaufwärts von dem zweiten Adsorptionsbehälter zu leiten, umfasst.

8. Vorrichtung nach Anspruch 7, wobei es sich bei der ersten Stufe des Verdichters (C1) um eine axiale Stufe handelt.

9. Vorrichtung nach Anspruch 7 oder 8, wobei die Wärmeaustauscheinrichtung (H1,R1) es dem mit Stickstoff angereicherten Gas erlaubt, stromaufwärts des zweiten Adsorptionsbehälters durch indirekten Wärmeaustausch mit in einer ersten Stufe des Kompressors verdichteter Luft als die einzige Wärmequelle, die über einen geschlossenen Kreislauf (17,P) übertragen wird, erwärmt zu werden.

10. Vorrichtung nach einem der Ansprüche 7 bis 9, enthaltend einen weiteren Kühlapparat (R2) zur Kühlung der Luft zwischen der ersten und der zweiten Stufe (C1, C2) des Kompressors.

## Revendications

1. Procédé de séparation d'air par distillation cryogénique dans lequel
i) de l'air est comprimé dans un compresseur ayant au moins deux étages (C1, C2) pour former de l'air comprimé, tout l'air comprimé dans le premier des deux étages étant comprimé dans le deuxième des deux étages,
ii) l'air comprimé, comprimé dans le deuxième étage du compresseur, est purifié dans une première cuve d'adsorption (E01) d'une unité de purification (E) ayant au moins des première et deuxième cuves d'adsorption raccordées en parallèle, pour former de l'air purifié (13),
iii) l'air purifié issu de l'unité de purification est refroidi depuis une température ambiante jusqu'à une température cryogénique dans un échangeur de chaleur (HX) et séparé dans un système de colonne de distillation (K) pour produire un fluide enrichi en oxygène (O) et/ou un fluide enrichi en azote (21),
iv) un gaz enrichi en azote est retiré du système de colonne de distillation,
v) le gaz enrichi en azote est réchauffé en amont de la deuxième cuve d'adsorption par échange de chaleur indirect avec de l'air pour refroidir l'air, l'air ayant été comprimé dans le premier étage du compresseur et devant être comprimé dans le deuxième étage du compresseur,
vi) le gaz enrichi en azote réchauffé est envoyé à la deuxième cuve d'adsorption (E02) en tant que gaz de régénération, sans être détendu dans une turbine,
**caractérisé en ce que** le gaz enrichi en azote est réchauffé jusqu'à une température d'au moins 90 °C en amont de la deuxième cuve d'adsorption, le gaz enrichi en azote étant réchauffé par échange de chaleur avec de l'air au moyen d'un circuit fermé (17, P) dans lequel de l'eau circule à une pression supérieure à 1,5 bar abs., de préférence à une pression supérieure à 5 bars abs., et un autre courant de gaz enrichi en azote retiré de la colonne de distillation est réchauffé par un autre moyen, par exemple un réchauffeur électrique (H2), pour former un autre courant réchauffé, l'autre courant réchauffé étant plus chaud que le gaz enrichi en azote réchauffé jusqu'à une température d'au moins 90 °C et l'autre courant réchauffé étant envoyé après mélange avec le gaz enrichi en azote réchauffé jusqu'à une température d'au moins 90 °C à la deuxième cuve d'adsorption (E02).

2. Procédé selon la revendication 1 dans lequel le gaz enrichi en azote est chauffé après l'étape de chauffage avec l'air comprimé par un autre moyen, par exemple par chauffage avec un réchauffeur électrique (H2) .

3. Procédé selon une quelconque revendication précédente dans lequel l'air (5) est encore refroidi après avoir été refroidi par l'azote et avant d'entrer dans le deuxième étage du compresseur (C2).

4. Procédé selon une quelconque revendication précédente dans lequel l'eau est chauffée par échange de chaleur indirect avec l'air comprimé dans un premier étage du compresseur (C1) et devant être comprimé dans un deuxième étage du compresseur (C2) pour refroidir l'air, et l'eau est utilisée dans un autre procédé que le procédé de séparation d'air.

5. Procédé selon une quelconque revendication précédente dans lequel aucune chaleur de la compression issue de n'importe quel autre étage (C2) du compresseur n'est utilisée pour chauffer le gaz enrichi en azote devant être envoyé à l'unité de purification (E).

6. Procédé selon une quelconque revendication précédente dans lequel, pendant une première période correspondant à une période de régénération d'une des cuves d'adsorption (E01, E02), le gaz enrichi en azote est réchauffé par échange de chaleur avec l'air au moyen du circuit fermé (17, P), et pendant une deuxième période pendant laquelle aucune des cuves d'adsorption ne subit une régénération, le gaz enrichi en azote n'est pas réchauffé au moyen du circuit fermé, mais le circuit fermé sert à chauffer une autre entité (B).

7. Appareil de séparation d'air par distillation cryogénique comprenant un compresseur ayant au moins deux étages (C1, C2), une unité de purification (E) ayant au moins des première et deuxième cuves d'adsorption (E01, E02) raccordées en parallèle, un système de colonne de distillation (K), une conduite pour envoyer de l'air devant être comprimé au compresseur ayant au moins deux étages pour former de l'air comprimé, de telle sorte que tout l'air comprimé dans le premier des deux étages est également comprimé dans le deuxième des deux étages, une conduite pour envoyer l'air comprimé (11) issu du compresseur pour qu'il soit purifié dans la première cuve d'adsorption de l'unité de purification pour former de l'air purifié, un échangeur de chaleur (HX) pour refroidir l'air purifié issu de l'unité de purification jusqu'à une température cryogénique, une conduite pour envoyer l'air issu de l'échangeur de chaleur au système de colonne de distillation pour produire un fluide enrichi en oxygène (O) et/ou un fluide enrichi en azote, une conduite pour retirer un gaz enrichi en azote (21) du système de colonne de distillation, un moyen d'échange de chaleur (H1, R1) permettant de réchauffer le gaz enrichi en azote en amont de la deuxième cuve d'adsorption par échange de chaleur indirect avec l'air (3) comprimé dans le premier étage du compresseur (C1) et devant être comprimé dans le deuxième étage du compresseur (C2), et une conduite (31, 43, 45) pour envoyer le gaz enrichi en azote réchauffé issu du moyen d'échange de chaleur à la deuxième cuve d'adsorption (E02), ladite conduite n'étant pas raccordée à une turbine,
**caractérisé en ce qu'**il comprend un autre moyen de chauffage (H2) pour chauffer un autre courant de gaz enrichi en azote et une conduite (45) pour envoyer l'autre gaz pour qu'il soit mélangé avec le gaz enrichi en azote réchauffé en amont de la deuxième cuve d'adsorption.

8. Appareil selon la revendication 7 dans lequel le premier étage du compresseur (C1) est un étage axial.

9. Appareil selon la revendication 7 ou 8 dans lequel le moyen d'échange de chaleur (H1, R1) permet de réchauffer le gaz enrichi en azote en amont de la deuxième cuve d'adsorption par échange de chaleur indirect avec l'air comprimé dans un premier étage du compresseur comme unique source de chaleur devant être transférée par le biais d'un circuit fermé (17, P).

10. Appareil selon l'une quelconque des revendications 7 à 9 comportant un autre refroidisseur (R2) pour refroidir l'air entre les premier et deuxième étages (C1, C2) du compresseur.
